# EUROPEAN PATENT SPECIFICATION

(11) **EP 3 226 055 B1**
(45) Date of publication and mention of the grant of the patent: **30.12.2020**
(21) Application number: 17164027.9
(22) Date of filing: 30.03.2017
(51) Int. Cl.: G02B 13/00, G02B 27/10, G02B 27/28, H04N 3/14, H04N 5/225, G03B 17/17, H04N 5/232, G03B 17/12

(54) **OPTICAL SYSTEM, ELECTRONIC DEVICE, CAMERA, METHOD AND COMPUTER PROGRAM**
OPTISCHES SYSTEM, ELEKTRONISCHE VORRICHTUNG, KAMERA, VERFAHREN UND COMPUTERPROGRAMM
SYSTÈME OPTIQUE, DISPOSITIF ÉLECTRONIQUE, CAMÉRA, PROCÉDÉ ET PROGRAMME INFORMATIQUE

(30) Priority: 31.03.2016 EP 16163388
(43) Date of publication of application: 04.10.2017
(73) Proprietor: Sony Corporation, Tokyo 108-0075 (JP)
(72) Inventor: KAMM, Markus, 76199 Karlsruhe (DE); SCHASCHEK, Fabian, 70197 Stuttgart (DE); TANABE, Norihiro, Kanagawa, 243-0014 (JP); NOMURA, Yoshikuni, Kanagawa, 243-0014 (JP)
(74) Representative: MFG Patentanwälte Meyer-Wildhagen Meggle-Freund Gerhard PartG mbB

(56) References cited:
- EP-A1- 2 868 254
- EP-A2- 1 637 912
- WO-A1-2013/152205
- JP-A- 2012 133 311
- US-A- 3 945 034
- US-A1- 2010 165 080
- US-A1- 2012 026 366
- US-A1- 2015 189 135
- HONG HUAM ET AL: "Dual-sensor foveated imaging system", APPLIED OPTICS, OPTICAL SOCIETY OF AMERICA, WASHINGTON, DC; US, vol. 47, no. 3, 20 January 2008 (2008-01-20), pages 317-327, XP001511036, ISSN: 0003-6935, DOI: 10.1364/AO.47.000317
- Anonymous: "Brewster's angle - Wikipedia", , 24 February 2016 (2016-02-24), XP055700228, Retrieved from the Internet: URL:https://en.wikipedia.org/w/index.php?t itle=Brewster's_angle&oldid=706602222 [retrieved on 2020-06-02]
- Anonymous: "Image sensor format - Wikipedia", , 8 March 2016 (2016-03-08), XP055698729, Retrieved from the Internet: URL:https://en.wikipedia.org/w/index.php?t itle=Image_sensor_format&oldid=708856803 [retrieved on 2020-05-27]

## Description

### TECHNICAL FIELD

The present disclosure generally pertains to the field of digital cameras, in particular to digital cameras with zoom capabilities without mechanically moving parts. The present disclosure also pertains to electronic devices that implement such cameras.

### TECHNICAL BACKGROUND

Zoom lenses in general require lens groups which move mechanically along the optical axis in order to vary from short to long focal length, which is equivalent to vary from wide-angle lens mode to tele-lens mode. The ratio between longest and shortest focal length is called zoom ratio. The zoom actuators for the mechanical movement are bulky and therefore difficult to integrate into small cameras such as mobile phone (smartphone) or tablet cameras. Also the mechanical tolerances of the actuators may be too large compared to the small dimension of lenses in smartphone cameras. Moreover the mechanical movement of the zoom actuator is relatively slow, in particular when taking snapshots.

WO 2013/152205 A1 discloses a foveated imaging system capable of capturing a wide field of view image and a foveated image, where the foveated image is a controllable region of interest of the wide field of view image.

US2012/026366 A1 discloses a method for continuous electronic zoom in a computerized image acquisition system, the system having a wide image acquisition device and a tele image acquisition device having a tele image sensor array coupled with a tele lens having a narrow FOV, and a tele electronic zoom.

Other approaches realize wide-angle- and tele-mode by using dual cameras, having one wide-angle camera and one tele camera side by side. This approach has the disadvantage of a baseline between the optical axes of wide- and tele-lens, which causes parallax errors between the views of both cameras

Regardless whether using the dual camera or the zoom actuator approach, in any case the overall length of the tele lens is quite long because of the inherently long focal length of the tele lens.

Although there exist techniques for digital cameras with zoom capabilities, it is generally desirable to provide digital cameras with improved zoom capabilities.

### SUMMARY

According to a first aspect the disclosure provides an electronic device as defined in the appended set of claims.

### BRIEF DESCRIPTION OF THE DRAWINGS

Embodiments are explained by way of example with respect to the accompanying drawings, in which:
Fig. 1 shows a first example
   of an optical system with a wide-angle lens and a tele lens that have coincident optical axis, which does not form part of the invention;
Fig. 2 shows a second example of an optical system with a wide-angle lens and a tele lens that have coincident optical axis, which does not form part of the invention;
Fig. 3 shows a third example of an optical system with a wide-angle lens and a tele lens that have coincident optical axis, which does not form part of the invention;
Fig. 4 shows a fourth example of an optical system with a wide-angle lens and a tele lens that have coincident optical axis, which does not form part of the invention;
Fig. 5 shows a fifth example of an optical system with a wide-angle lens and a tele lens that have coincident optical axis, which does not form part of the invention;
Fig. 6 shows an embodiment of an optical system with a wide-angle lens and a tele lens that have coincident optical axis;
Fig. 7 schematically describes a method of generating a combined image from wide-angle image data and tele image data;
Fig. 8 schematically depicts a process of generating a combined image from wide-angle image data and tele image data; and
Fig. 9 schematically describes an embodiment of an electronic device, here e.g. a smartphone, that comprises a wide-angle image sensor and a tele image sensor.

### DETAILED DESCRIPTION OF EMBODIMENTS

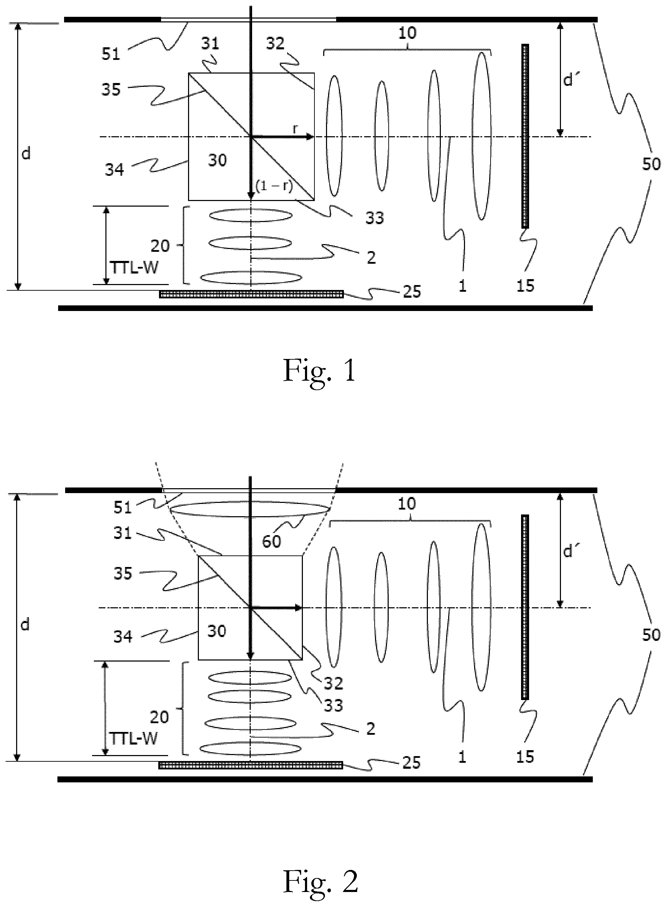

Before a detailed description of the examples under reference of Fig. 1 is disclosed, general explanations are made.

The examples and embodiments described below in more detail disclose an electronic device comprising an optical system that combines a first lens and a second by means of a beam splitter. The electronic device may for example be a camera, in particular a digital camera. The electronic device may also be a smartphone or a tablet computer comprising a camera. Any other use cases where a camera is applied are also possible. In some embodiments, the optical system, e.g. a camera with optical zoom capabilities may be integrated into a mobile phone.

In : the embodiment described below in more detail the first lens is a lens with a first focal length and the second lens is a lens with a second focal length that is longer than the focal length of the first lens. For example, the first lens may be a tele lens that creates a magnified or zoomed image on its respective image sensor, and the second lens may be a wide-angle lens that creates a wide field-of-view (FoV) image on its respective image sensor. An optical system that combines a tele lens and a wide-angle lens by means of a beam-splitter may provide zoom capabilities without mechanically moving parts.

In other embodiments, the first lens and the second lens have the same focal length. Still alternatively, the first lens and the second lens may have a different focal length, but same field of view (in case of different sensor sizes). This may for example allow to combine the high spatial resolution of a black-white (BW) sensor without color filters with the high spectral resolution (but low spatial resolution) of a multi-color sensor.

According to an embodiment, the size of the image sensor of the wide-angle lens and the size of the image sensor of the tele lens are substantially equal. Under the assumption that the size of both image sensors is substantially equal, the focal length of the wide-angle lens is shorter than the focal length of the tele lens. For example the diagonal size of both image sensors may be 6 mm and the focal length of the wide-angle lens may be 4 mm and the focal length of the tele-lens may be 12 mm. A beam-splitter is an optical device that splits a beam of light in two. According to some embodiments, the beam-splitter is formed as a beam-splitter cube consisting of glass prisms and a beam-splitter surface coated on one side of one of the prisms. The beam-splitter surface may include or even consist of a multi-layer coating which may be adjusted such that (for a certain range of wavelength and angle of incidence) half of the light incident through one "port" (i.e., face of the cube) is reflected and the other half is transmitted due to multi-layer interference. In the embodiments described below, the beam-splitter surface acts as reflection plane that splits light entering through a light entrance in the housing of the electronic device into two light beams. One of the two light beams is directed towards a wide-angle lens and the other of the two light beams is directed towards a tele lens.

The first lens (e.g. tele lens) and the second lens (e.g. wide-angle lens) have a coincident optical axis at a side of the beam-splitter which receives incident light from a light entrance in a housing of the electronic device. Such an optical system with coincident optical axis at the light receiving side of the beam-splitter (directed towards the light entrance in the housing of the electronic device) may avoid parallax errors.

Still further, the optical axis of the first lens (e.g. tele lens) is folded by a surface of the beam-splitter. By folding the optical axis of the first lens (e.g. tele lens) by a surface of the beam-splitter the length of the second lens (e.g. wide-angle lens) may be restricted to fit within the limited space between a beam-splitter cube and the edge of a housing of the optical system. The folding of the optical axis may thus help to fit the tele lens within the slim body of a camera. For example, by folding the optical axis of the tele lens the tele lens may fit into the thickness of about 6 mm of a smartphone or tablet computer.

Still further, according to an optical system of some embodiments, a common lens is placed in front of the face of the beam-splitter that receives the incident light. By placing the common lens in front of the face of the beam-splitter that receives the incident light the common lens is integrated into the design of both the first lens (e.g. tele lens) and the second lens (e.g. wide-angle lens), so that the common lens is common part of both the first lens and the second lens. According to the embodiments, the common lens that is arranged before the beam-splitter near the light entrance in the housing of the electronic device narrows down the incoming light bundle. This may allow a smaller size of the beam-splitter cube and more space for the wide-angle lens.

Still further, according to an optical system of some embodiments, the optical axis of the first lens (e.g. tele lens) is folded by less than 90 degrees. In an embodiment where the optical axis of the first lens (e.g. tele lens) is folded by less than 90 degrees a face of the beam-splitter (the face directed towards the first lens) may be tilted so that the folded optical axis of the first lens hits this face of the beam-splitter at normal incidence to avoid refraction of the optical axis.

Still further, in an embodiment where the optical axis of the first lens (e.g. tele lens) is folded by less than 90 degrees the beam-splitter may be placed close to a light entrance of a housing of the electronic device. This may allow to fit the lens elements and housing of the tele lens and an image sensor of the tele lens within the edges of a housing.

Still further, both the optical axis of the first lens (e.g. tele lens) and the optical axis of the second lens (e.g. wide-angle lens) are folded by a surface of the beam-splitter. This may further relax the space restrictions for the wide-angle lens.

Still further, the optical axis of the tele lens is folded by placing a mirror at a face of the beam-splitter cube that reflects light back into the beam-splitter.

Still further, the beam-splitter comprises a polarizing beam-splitter surface. The polarizing beam-splitter surface may for example reflect s-polarized light and transmit p-polarized light. The polarizing beam-splitter surface can for example be realized by a stack of interference layers of alternating high- and low-refractive index material. Alternatively it can be realized by a wire grid structure (wire grid polarizers).

Still further, quarter-wave retarder plate is arranged after the beam-splitter. This quarter-wave retarder plate may be arranged in such a way that the p-polarized light leaves the beam-splitter and then passes the quarter-wave retarder plate that is arranged after the beam-splitter. In particular, the fast axis of the quarter-wave plate may be oriented at 45 degrees with respect to the polarization direction of the p-polarized light, thereby converting the p-polarized light into circular polarized light. In such an embodiment, after being reflected at a mirror, the circular polarized light changes its chirality, either from left circular to right circular or vice versa, and finally, when passing the quarter-wave retarder plate, it is converted into s-polarized light and enters the beam-splitter. The s-polarized light now is redirected by the polarizing beam-splitter surface in direction of the first lens (e.g. tele lens).

Still further, second quarter-wave plate is placed in front of a face of the beam-splitter in a direction of the light entrance in the housing of the electronic device. In particular, the fast axis of the second quarter-wave retarder plate may be oriented at 45 degrees with respect to the polarization direction of p-polarized light. In this embodiment, p- or s-polarized light passing the second quarter-wave retarder plate is converted into circular-polarized light, which is equally split at the polarizing beam-splitter surface. Linear polarized light with polarization direction of +/- 45 degrees with respect to the polarization direction of p-polarized (or s-polarized) light is not affected by the second quarter-wave retarder plate and is also equally split at the polarizing beam-splitter surface.

Still further, either one sensor is a sensor without color filters and the other sensor is a color sensor with Bayer pattern color filters or, alternatively, both sensors may have color filters with different pattern and spectral range.

An optical system that combines a wide-angle lens and a tele lens by means of a beam-splitter may provide zoom capabilities without mechanically moving parts.

Still further, according to an optical system of some embodiments, the tele lens is a telephoto lens. A telephoto lens works by having the outermost (i.e. light gathering) element of a much shorter focal length than the equivalent long-focus lens and then incorporating a second set of elements close to the sensor plane that extend the cone of light so that it appears to have come from a lens of much greater focal length. A telephoto ratio is defined by the ratio between the overall length of a lens and its focal length. In practice telephoto ratios of about 80% are typically achieved. For example, if the focal length of the wide angle lens is 4 mm and the zoom ratio is specified to a factor 3, the resulting focal length of the tele lens is 3 x 4 mm = 12 mm. If the tele lens is realized as a telephoto lens with a telephoto ratio of 80%, the remaining length of the tele lens is 0.8 x 12 mm = 9.6 mm, which is still quite large compared to the thickness of a smartphone.

Still further, an electronic device of some embodiments further comprises circuitry configured to digitally combine an image obtained by the image sensor of the second lens with an image obtained by the image sensor of the first lens.

In particular, according to an electronic device of some embodiments, the first lens is a tele lens, the second lens is a wide-angle lens and the circuitry is configured to digitally embed an image obtained by the image sensor of the tele lens into an image obtained by the image sensor of the wide-angle lens.

The circuitry may be a processor that is controlled by software, or the like. The circuitry may for example be configured to digitally embed the image obtained by the tele lens into the wide-angle image by means of digital image processing techniques for creating a digital image with high resolution in the center part and lower resolution in the outer part. Digital interpolation techniques can be used for zooming continuously from the wide-angle image to the tele-image.

Several examples, which do not form part of the invention, as well as a specific embodiment are now described with reference to the accompanying Figures.

Fig. 1 shows a first example of an optical system with a wide-angle lens and a tele lens that have coincident optical axis, which does not form part of the invention. The optical axis 1 of the tele lens 10 is folded by a beam-splitter surface 35.

A certain fraction r of the incoming light is reflected by the beam-splitter surface 35 and a complementary fraction (1 - r) is passing the beam-splitter surface. Light is entering the beam-splitter cube 30 at a first face 31. The folded optical axis 1 is leaving the beam-splitter cube 30 at a second face 32. The optical axis 2 of the wide-angle lens 20 is not folded and the wide-angle lens is placed in close vicinity to a third face 33 of the beam-splitter cube 30. The length TTL-W of the wide-angle lens is restricted to fit within the limited space between beam-splitter cube 30 and the edge of the housing 50. For example the distance from the light entrance 51 of the housing 50 to the wide-angle sensor 25 is limited to d = 6 mm and the edge length of the beam-splitter cube 30 is a = 2.5 mm.

The distance d' between the optical axis 1 of the tele lens and the edge of the housing 50 is at least half of the width of image sensor 15 plus some margin, for example d' = 2 mm. In that case the length of the wide-angle lens 20 is limited to TTL-W < (6 mm - 2 mm - 2.5/2 mm) = 2.75 mm.

Fig. 2 shows a second example of an optical system with a wide-angle lens and a tele lens that have coincident optical axis, which does not form part of the invention. The example of Fig. 2 is based on the example of Fig. 1. A common lens 60, placed in front of the first face 31 of the beam-splitter cube 30, narrows down the incoming light bundle, thereby allowing a smaller size of the beam-splitter cube and more space for the wide-angle lens. The common lens 60 needs to be integrated into the design of both the tele lens 10 and the wide-angle lens 20.

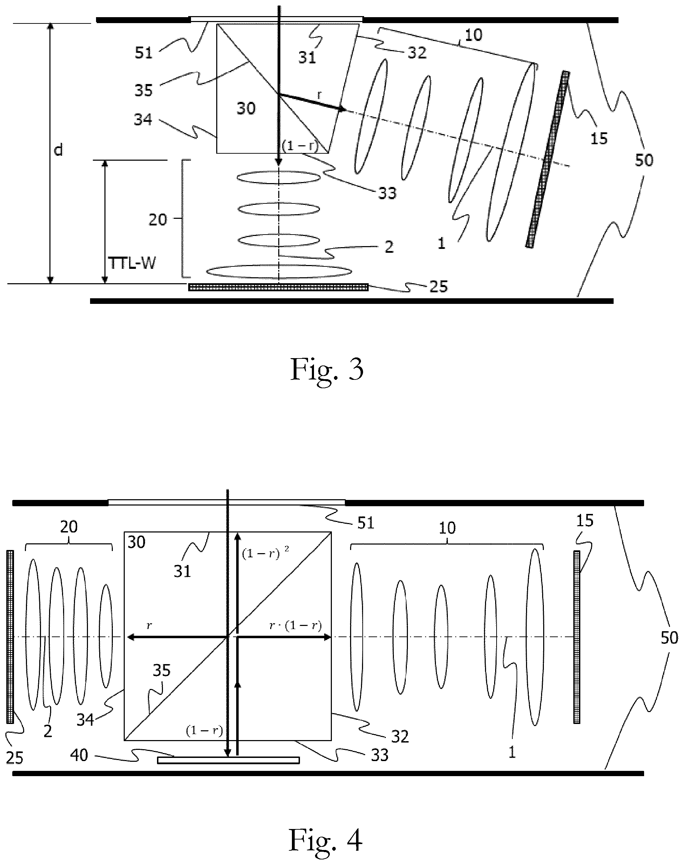

Fig. 3 shows a third example of an optical system with a wide-angle lens and a tele lens that have coincident optical axis, which does not form part of the invention. The example of Fig. 3 is based on the example of Fig. 1. In order to relax the space restrictions for the wide-angle lens, the beam-splitter cube 30 is placed closer to the light entrance 51 of the housing 50. In that case the optical axis 1 of the tele lens is folded by less than 90 degrees in order to fit the lens elements and housing of the tele lens 10 and the tele image sensor 15 within the edges of the housing 50. In that case the second face 32 of the beam-splitter cube 30 needs to be tilted in order to ensure that the folded optical axis 1 hits the second face 32 at normal incidence to avoid refraction of the optical axis.

Fig. 4 shows a fourth example of an optical system with a wide-angle lens and a tele lens that have coincident optical axis, which does not form part of the invention. The example of Fig. 4 is based on the example of Fig. 1. In order to further relax the space restrictions for the wide-angle lens 20, both the optical axis 1 of the tele lens and the optical axis 2 of the wide-angle lens 20 are folded. This is realized by a mirror 40, placed at the third face 33 of the beam-splitter cube 30. Light is back-reflected by this mirror into the beam-splitter cube 30 and a fraction r of the back-reflected light is redirected by the beam-splitter surface 35 in direction of the second face 32 and entering the tele lens10. The complementary fraction (1 - r) of the back-reflected light is passing the beam-splitter surface 35 in direction of the first face 31 and is lost. This limits the light efficiency of the tele lens path. For example the fraction of light which is reflected at the beam-splitter surface 35 is r = 50% and 100% of the light is reflected at the mirror. In that case only 0.5 ^{∗} (1 - 0.5) = 25% of the incoming light is finally entering the tele lens.

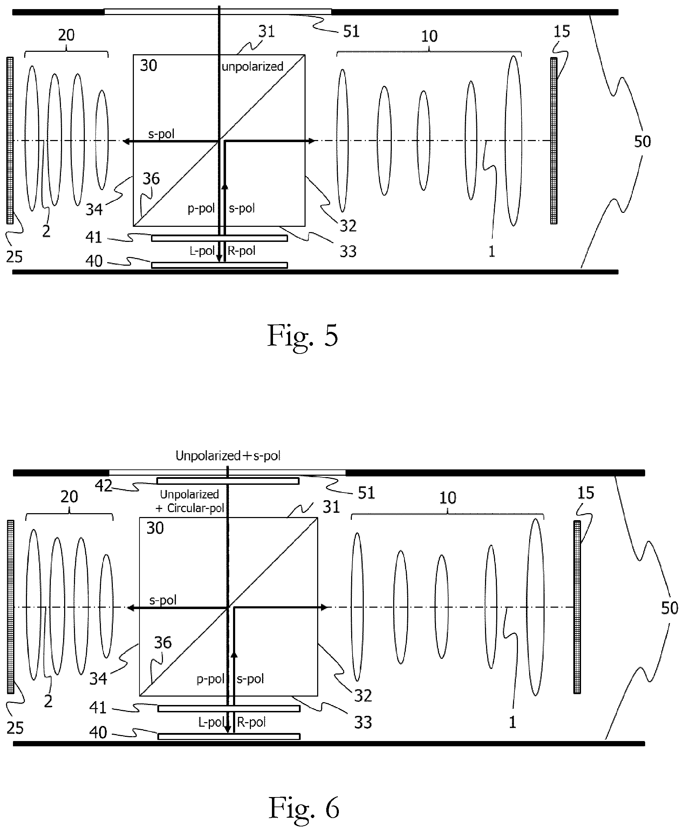

Fig. 5 shows a fifth example of an optical system with a wide-angle lens and a tele lens that have coincident optical axis, which does not form part of the invention. The example of Fig. 5 is based on the example of Fig. 4. In order to overcome the limitations from Fig. 4 regarding light efficiency, the beam-splitter surface is realized as a polarizing beam-splitter surface 36. It reflects s-polarized light and transmits p-polarized light. The p-polarized light leaves the beam-splitter cube at the third face 33 and passes a quarter-wave retarder plate 41. The fast axis of the quarter-wave plate 41 is oriented at 45 degrees with respect to the polarization direction of the p-polarized light, thereby converting the p-polarized light into circular polarized light. After being reflected at the mirror 40, the circular polarized light changed its chirality, either from left circular to right circular or vice versa, and finally, when passing the quarter-wave retarder plate 41, it is converted into s-polarized light and enters the third face 33 of the beam-splitter cube 30. The s-polarized light now is redirected by the polarizing beam-splitter surface 36 in direction of the second face 32 and enters the tele lens 10.

The polarizing beam-splitter surface 36 can be realized by a stack of interference layers of alternating high- and low-refractive index material. Alternatively it can be realized by a wire grid structure (wire grid polarizers).

For example, the polarizing beam-splitter coating 36 reflects r = 99% of the incoming s-polarized light and transmits t = 90% of the p-polarized light. The mirror 40 may reflect about 92% of the light and the conversion efficiency of the quarter-wave retarder plate 41 for converting linear polarized light into circular polarized light and vice versa is about 95%. For the case of incoming unpolarized light (50% s- and 50% p-polarized), the amount of light entering the tele lens can be estimated at 0.5 ^{∗} 0.9 ^{∗} 0.95 ^{∗} 0.92 ^{∗} 0.95 ^{∗} 0.99 = 37% of the incoming light.

Fig. 6 shows an embodiment of an optical system with a wide-angle lens and a tele lens that have coincident optical axis. The embodiment of Fig. 6 is based on the example of Fig. 5. Light glare coming from specular reflections is often partially linear-polarized. Such partially linear-polarized light would be unequally split at the polarizing beam-splitter surface 36, leading to an unequal intensity of glare at the image sensors 15 and 25. In order to match the glare equally between image sensors 15 and 25 a second quarter-wave plate 42 is placed in front of the first face 31 of the beam-splitter cube 30. The fast axis of the second quarter-wave retarder plate 42 is oriented at 45 degrees with respect to the polarization direction of p-polarized light. P- or s-polarized light passing the second quarter-wave retarder plate 42 is converted into circular-polarized light, which is equally split at the polarizing beam-splitter surface 36. Linear polarized light with polarization direction of +/- 45 degrees with respect to the polarization direction of p-polarized (or s-polarized) light is not affected by the second quarter-wave retarder plate 42 and is also equally split at the polarizing beam-splitter surface 36.

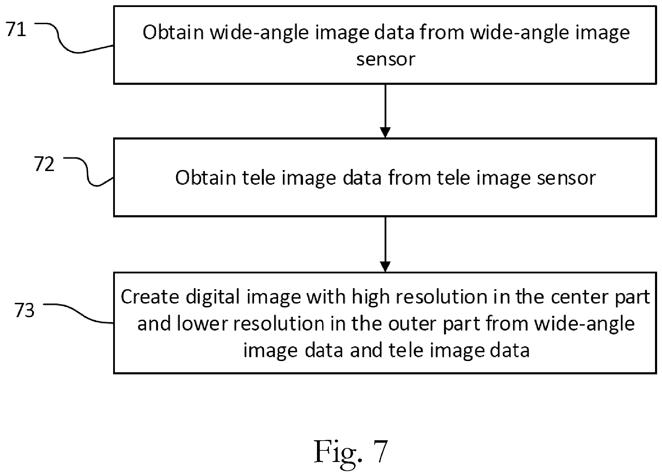

Fig. 7 schematically describes a method of generating a combined image from wide-angle image data and tele image data. At 71, wide-angle image data is obtained from a wide-angle image sensor. At 72, tele image data is obtained from a tele image sensor. At 73, a combined image that is a digital image with high resolution in the center part and lower resolution in the outer part is created from the wide-angle image data and the tele image data.

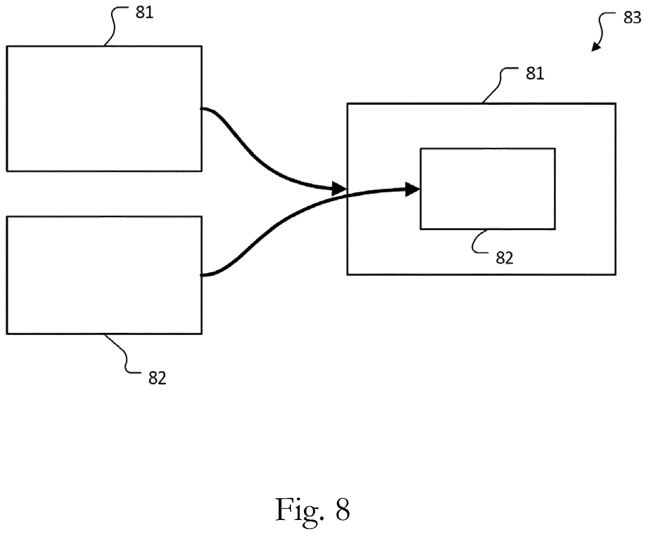

Fig. 8 schematically depicts a process of generating a combined image from wide-angle image data and tele image data. A combined image 83 is created from a wide-angle image data 81 and a tele image data 82. The combined image 83 is a digital image with high resolution in the center part and lower resolution in the outer part.

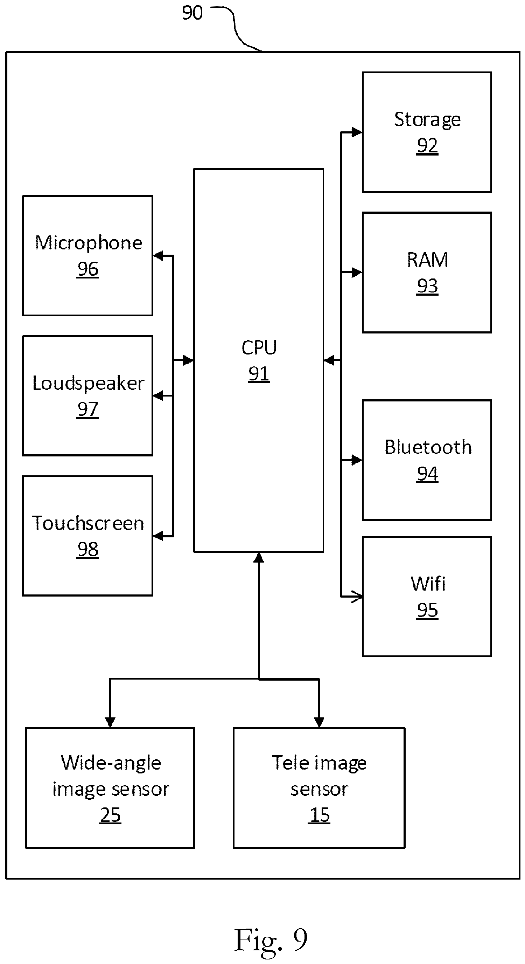

Fig. 9 schematically describes an embodiment of an electronic device, here e.g. a smartphone, that includes a wide-angle image sensor and a tele image sensor. The electronic device 90 includes a CPU 91 as processor. The electronic device 90 further includes a microphone 96, a loudspeaker 97, and a touchscreen 98 that are connected to the processor 91. These units 96, 97, 98 act as a man-machine interface and enable a dialogue between a user and the electronic device. The electronic device 90 further includes a Bluetooth interface 94 and a Wifi interface 95. These units 94, 95 act as I/O interfaces for data communication with external devices such as cloud platforms for uploading images taken with the electronic device. The electronic device 90 further includes a wide-angle image sensor 25 that cooperates with a wide-angle lens (see 20 in Figs. 1-6) and a tele image sensor 15 that cooperates with a tele lens (see 10 in Figs. 1-6). These image sensors 15 and 25 provide image data, in particular wide-angle image data (81 in Fig. 8) that is obtained by the wide-angle image sensor 25 and tele image data (82 in Fig. 8) that is obtained by the tele image sensor 15. The processor 91 executes interpolation software that combines the wide-angle image data obtained by wide-angle image sensor 25 and the tele image data obtained by tele image sensor 15 to obtain a combined image (83 in Fig. 8). The electronic device 90 further includes a data storage 92 and a data memory 93 (here a RAM). The data memory 93 is arranged to temporarily store or cache data or computer instructions for processing by processor 91. The data storage 92 is arranged as a long term storage, e.g. for recording image data obtained from image sensors 15, 25.

Summarizing, in the examples of Fig. 1 to Fig. 3, exemplary, the optical axis of the first lens (tele lens) is folded by the beam-splitter coating, in order to fit the longer tele lens within the 6 mm size restriction discussed above. In the examples of Fig. 4 and Fig. 5 as well as the embodiment of Fig. 6, the optical axis of the second lens (wide-angle lens) is, exemplary, directly folded by the beam-splitter coating. Hence, in some embodiments the path length of the directly folded path is shorter than path which is reflected by the mirror of the beam-splitter. In some embodiments, with a shorter path length, the larger field of view of the wide-angle lens can better fit within the limited size of the beam-splitter cube.

In the above an optical system for an electronic device such as a digital camera or smartphone was described with reference to the examples of Fig. 1 to Fig. 5 as well as the embodiment of Fig. 6 above. The disclosure is, however, not limited to the embodiment of Fig. 6

For example, in the embodiment of Fig. 6, the beam-splitter surface 36 can be flipped such, that the light enters the tele lens on direct and the wide-angle lens on the back-reflected way respectively.

Still further, instead of using a beam-splitter cube consisting of glass prisms and a beam-splitter surface coated on one side of one of the prisms, a beam-splitter plate could be used. It consists of a substrate plate (e.g. glass plate) and a beam-splitter surface coated at one side of the substrate.

The methods as described herein are also implemented in some embodiments as a computer program causing a computer and/or a processor to perform the method, when being carried out on the computer and/or processor. In some embodiments, also a non-transitory computer-readable recording medium is provided that stores therein a computer program product, which, when executed by a processor, such as the processor described above, causes the methods described herein to be performed.

It should be recognized that the embodiments describe methods with an exemplary ordering of method steps. The specific ordering of method steps is however given for illustrative purposes only and should not be construed as binding. For example the ordering of 71 and 72 in the embodiment of Fig. 7 may be exchanged. Other changes of the ordering of method steps may be apparent to the skilled person.

It should further be recognized that the division of the electronic device 90 into units 91-98 is only made for illustration purposes and that the present disclosure is not limited to any specific division of functions in specific units. For instance, the electronic device 90 could be implemented by a respective programmed processor, field programmable gate array (FPGA) and the like, that combines certain functionality shown in Fig. 9.

It should further be recognized that as far as the disclosure refers to circuitry that is configured to perform a specific function, it is foreseen that circuitry may be configured to perform the specific function by processing instructions such as software, computer programs, and the like. The circuitry may also be distributed between electronic devices and e.g. a cloud platform.

All units and entities of the electronic device described in this specification and claimed in the appended claims can, if not stated otherwise, be implemented as integrated circuit logic, for example on a chip, and functionality provided by such units and entities can, if not stated otherwise, be implemented by software.

In so far as the embodiments of the disclosure described above are implemented, at least in part, using a software-controlled data processing apparatus, it will be appreciated that a computer program providing such software control and a transmission, storage or other medium by which such a computer program is provided are envisaged as aspects of the present disclosure.

### List of components

- 1: Optical axis of the tele lens
- 2: Optical axis of wide-angle lens
- 10: Tele lens
- 15: Image sensor of tele lens
- 20: Wide-angle lens
- 25: Image sensor of wide-angle lens
- 30: Beam-splitter cube
- 31: First face of beam-splitter cube
- 32: Second face of beam-splitter cube
- 33: Third face of beam-splitter cube
- 34: Fourth face of beam-splitter cube
- 35: Beam-splitter surface
- 36: Polarizing beam-splitter surface
- 40: Mirror
- 41: Quarter-wave retarder plate
- 42: Second quarter-wave retarder plate
- 50: Housing
- 51: Light entrance window
- 60: Common lens
- 81: Wide-angle image
- 82: Tele image
- 83: Combined image
- 90: Smartphone
- 91: CPU
- 92: Storage
- 93: RAM
- 94: Bluetooth
- 95: Wifi
- 96: Microphone
- 97: Loudspeaker
- 98: Touchscreen

## Claims

1. An electronic device comprising a first image sensor (15), a second image sensor (25), and an optical system located in a housing (50) of the electronic device,
the optical system combining a first lens (10) placed before the first image sensor (15) and a second lens (20) placed before second image sensor (25) by means of a beam splitter (30),
wherein the first lens (10) and the second lens (20) have a coincident optical axis at a side of the beam-splitter (30) which receives incident light from a light entrance (51) in the housing (50) of the electronic device, and wherein the optical system further comprises
a mirror (40) placed at a face of the beam-splitter (30) that reflects light back into the beam-splitter (30),
a quarter-wave retarder plate (41) arranged between the beam-splitter (30) and the mirror (40), wherein both the optical axis (1) of the first lens (10) and the optical axis (2) of the second lens (20) are folded by a surface of the beam-splitter (30), and wherein the beam-splitter (30) comprises a polarizing beam-splitter surface (36), **characterized in that**:
the electronic device further comprises a second quarter-wave plate (42) placed in front of a face of the beam-splitter (30) in a direction of the light entrance (51) in the housing (50) of the electronic device, and
wherein the first image sensor (15) or the second image sensor (25) is a sensor without color filters and the other one of the first image sensor (15) or the second image sensor (25) is a color sensor with Bayer pattern color filters;
or wherein the first image sensor (15) and the second image sensor (25) have color filters with different pattern and spectral range.

2. The electronic device of claim 1 wherein the first lens (10) is a tele lens that creates a magnified or zoomed image on its respective image sensor (15), and the second lens (20) is a wide-angle lens that creates a wide field-of-view image on its respective image sensor (25).

3. The electronic device of claim 2 wherein the tele lens is a telephoto lens.

4. The electronic device of claim 1, further comprising circuitry configured to digitally combine an image obtained by the image sensor (25) of the second lens (20) with an image obtained by the image sensor (15) of the first lens (10).

5. The electronic device of claim 4, in which the first lens (10) is a tele lens and the second lens (20) is a wide-angle lens, and the circuitry is configured to digitally embed an image obtained by the image sensor (15) of the tele lens into an image obtained by the image sensor (25) of the wide-angle lens.

## Patentansprüche

1. Elektronische Vorrichtung, die einen ersten Bildsensor (15), einen zweiten Bildsensor (25) und ein in einem Gehäuse (50) der elektronischen Vorrichtung befindliches optisches System umfasst,
wobei das optische System ein erstes Objektiv (10), platziert vor dem ersten Bildsensor (15), und ein zweites Objektiv (20), platziert vor dem zweiten Bildsensor (25), mittels eines Strahlteilers (30) kombiniert,
wobei das erste Objektiv (10) und das zweite Objektiv (20) eine zusammenfallende optische Achse an einer Seite des Strahlteilers (30) haben, der einfallendes Licht von einem Lichteingang(51) im Gehäuse (50) der elektronischen Vorrichtung aufnimmt, und wobei das optische System ferner Folgendes umfasst:
einen Spiegel (40), platziert an einer Fläche des Strahlteilers (30), der Licht zurück in den Strahlteiler (30) reflektiert,
eine Viertelwellen-Verzögererplatte (41), angeordnet zwischen dem Strahlteiler (30) und dem Spiegel (40),
wobei sowohl die optische Achse (1) des ersten Objektivs (10) als auch die optische Achse (2) des zweiten Objektivs (20) durch eine Oberfläche des Strahlteilers (30) gefaltet sind, und wobei der Strahlteiler (30) eine polarisierende Strahlteileroberfläche (36) umfasst,
**dadurch gekennzeichnet, dass**:
die elektronische Vorrichtung ferner eine zweite Viertelwellen-Platte (42) umfasst, die vor einer Fläche des Strahlteilers (30) in einer Richtung des Lichteingangs (51) im Gehäuse (50) der elektronischen Vorrichtung platziert ist, und
wobei der erste Bildsensor (15) oder der zweite Bildsensor (25) ein Sensor ohne Farbfilter ist und wobei der andere aus dem ersten Bildsensor (15) oder dem zweiten Bildsensor (25) ein Farbsensor mit Bayer-Matrix-Farbfiltern ist;
oder wobei der erste Bildsensor (15) und der zweite Bildsensor (25) Farbfilter mit unterschiedlichen Mustern und Spektralbereichen haben.

2. Elektronische Vorrichtung nach Anspruch 1, wobei das erste Objektiv (10) ein Tele-Objektiv ist, das ein vergrößertes oder gezoomtes Bild auf seinem entsprechenden Bildsensor (15) erzeugt, und wobei das zweite Objektiv (20) ein Weitwinkelobjektiv ist, das ein Bild mit weitem Sichtfeld auf seinem entsprechenden Bildsensor (25) erzeugt.

3. Elektronische Vorrichtung nach Anspruch 2, wobei das Tele-Objektiv ein Teleobjektiv ist.

4. Elektronische Vorrichtung nach Anspruch 1, ferner umfassend eine Schaltungsanordnung, die ausgelegt ist zum digitalen Kombinieren eines durch den Bildsensor (25) des zweiten Objektivs (20) erhaltenen Bildes mit einem durch den Bildsensor (15) des ersten Objektivs (10) erhaltenen Bild.

5. Elektronische Vorrichtung nach Anspruch 4, wobei das erste Objektiv (10) ein Tele-Objektiv ist und das zweite Objektiv (20) ein Weitwinkelobjektiv ist und wobei die Schaltungsanordnung dazu ausgelegt ist, ein durch den Bildsensor (15) des Tele-Objektivs erhaltenes Bild digital in ein durch den Bildsensor (25) des Weitwinkelobjektivs erhaltenes Bild einzubetten.

## Revendications

1. Dispositif électronique comprenant un premier capteur d'image (15), un second capteur d'image (25) et un système optique situé dans un boîtier (50) du dispositif électronique,
le système optique combinant un premier objectif (10) placée devant le premier capteur d'image (15) et un second objectif (20) placé devant le second capteur d'image (25) au moyen d'un séparateur de faisceau (30),
le premier objectif (10) et le second objectif (20) ayant un axe optique coïncident sur un côté du séparateur de faisceau (30) qui reçoit la lumière incidente d'une entrée de lumière (51) dans le boîtier (50) du dispositif électronique, et le système optique comprenant en outre :
un miroir (40) placé sur une face du diviseur de faisceau (30) qui réfléchit la lumière dans le diviseur de faisceau (30),
une plaque retardatrice quart d'onde (41) agencée entre le séparateur de faisceau (30) et le miroir (40),
l'axe optique (1) du premier objectif (10) et l'axe optique (2) du second objectif (20) étant tous deux pliés par une surface du diviseur de faisceau (30), et le diviseur de faisceau (30) comprenant une surface polarisante de diviseur de faisceau (36), **caractérisé en ce que**
le dispositif électronique comprend en outre une seconde plaque quart d'onde (42) placée devant une face du diviseur de faisceau (30) dans une direction de l'entrée de la lumière (51) dans le boîtier (50) du dispositif électronique, et
le premier capteur d'image (15) ou le second capteur d'image (25) étant un capteur sans filtres de couleur et l'autre du premier capteur d'image (15) et du second capteur d'image (25) étant un capteur de couleur avec des filtres de couleur à motifs Bayer ;
ou le premier capteur d'image (15) et le second capteur d'image (25) ayant des filtres de couleur avec un motif et une gamme spectrale différents.

2. Dispositif électronique selon la revendication 1, le premier objectif (10) étant un téléobjectif qui crée une image agrandie ou zoomée sur son capteur d'image respectif (15), et le second objectif (20) étant un objectif grand angle qui crée une image à grand champ de vision sur son capteur d'image respectif (25).

3. Dispositif électronique selon la revendication 2, le téléobjectif étant un téléobjectif photo.

4. Dispositif électronique selon la revendication 1, comprenant en outre un circuit configuré pour combiner numériquement une image obtenue par le capteur d'image (25) du second objectif (20) avec une image obtenue par le capteur d'image (15) du premier objectif (10).

5. Dispositif électronique selon la revendication 4, le premier objectif (10) étant un téléobjectif et le second objectif (20) étant un objectif grand angle, et le circuit étant configuré pour intégrer numériquement une image obtenue par le capteur d'image (15) du téléobjectif dans une image obtenue par le capteur d'image (25) de l'objectif grand angle.
